# EUROPÄISCHE PATENTSCHRIFT

(11) **EP 3 016 840 B1**
(45) Veröffentlichungstag und Bekanntmachung des Hinweises auf die Patenterteilung: **04.04.2018**
(21) Anmeldenummer: 14730426.5
(22) Anmeldetag: 24.05.2014
(51) Int. Cl.: B62D 35/00

(54) **HECKSPOILEREINRICHTUNG FÜR EIN FAHRZEUG**
REAR SPOILER DEVICE FOR A VEHICLE
DISPOSITIF FORMANT BECQUET ARRIÈRE POUR VÉHICULE AUTOMOBILE

(30) Priorität: 04.07.2013 DE 102013011169
(43) Veröffentlichungstag der Anmeldung: 11.05.2016
(73) Patentinhaber: WABCO Europe BVBA, 1160 Brussels (BE)
(72) Erfinder: DIECKMANN, Thomas, 30982 Pattensen (DE); KROST, Jakob Tobias, 38118 Braunschweig (DE); OLEKSIK, Josef, 38106 Braunschweig (DE); RICHTER, Timo, 38106 Braunschweig (DE); VAN RAEMDONCK, Gandert, NL-2611 PW Delft (NL); ZIELKE, Frank, 30890 Barsinghausen (DE)
(74) Vertreter: Lauerwald, Jörg
(86) Internationale Anmeldenummer: PCT/EP2014/001407
(87) Internationale Veröffentlichungsnummer: WO 2015/000538

(56) Entgegenhaltungen:
- EP-A1- 2 500 244
- DE-A1- 19 524 825
- US-A1- 2008 048 468

## Beschreibung

Die Erfindung betrifft eine Heckspoilereinrichtung für ein Fahrzeug, insbesondere ein Nutzfahrzeug, z. B. einen LKW, wobei das Fahrzeug mindestens eine Hecktüre, insbesondere zwei Hecktüren aufweist. Die Heckspoilereinrichtung ist insbesondere für ein Fahrzeug mit im Wesentlich kastenförmigen Aufbau bzw. Seitenwänden, Dach und diese nach hinten rechtwinklig abschließenden Hecktüren geeignet.

Die DE 10 2009 014 860 A1 zeigt eine derartige Heckspoilereinrichtung. Sie weist Luftleitelemente zur Konturverlängerung und aerodynamischen Luftleitung der Seitenwände und des Dachs auf, die in einer Grundstellung zu den Hecktüren hin eingeklappt und in der Fahrstellung bzw. Gebrauchsstellung aufgerichtet oder ausgefahren sind und hierbei an Befestigungselementen einer heckseitigen Fahrzeugkante abgestützt sind. Derartige Heckspoiler dienen der Verbesserung der Aerodynamik des Fahrzeugs und können den Kraftstoffverbrauch entsprechend senken.

Die DE 20 2009 014 476 U1, DE 20 2009 014 510 U1 und DE 20 2009 015 009 U1 zeigen weitere Heckspoilereinrichtungen, bei denen die Luftleitelemente bzw. Spoilerelemente verschiebbar oder schwenkbar angeordnet sind, um ein ungestörtes Öffnen der Hecktüren zu ermöglichen.

Weiterhin sind Heckspoiler bekannt, die an Scharnieren der Hecktüre angebunden sind. Die DE 102 28 658 A1 zeigt verschiedene Klapplösungen, bei denen über ein Scharnier schwenkbare Planflächen im Fahrbereich eine aerodynamische Optimierung ermöglichen sollen.

Die gattungsgemäße DE 195 24 825 A1 offenbart ein Nutzfahrzeug, bei dem eine oder mehrere Luftleitflächen vorgesehen sind, die auf der Heck-Beladetür drehbar gelagert sind und die von einem pneumatischen oder elektrischen Betätigungsmittel fahrzeuggeschwindigkeitsabhängig aufgeklappt werden. Die Vorrichtung ist so ausgebildet, daß die Beladetür ungehindert bis zur Fahrzeug-Seitenwand aufschlagen kann, ohne daß die Vorrichtung abmontiert oder manipuliert werden muß. Die Luftleitfläche kann vorwählbar in mindestens zwei Winkelpositionen geklappt werden und kann daher sowohl für Solo-Fahrzeuge als auch für Zugfahrzeuge, die einen Anhänger mit sich führen, verwendet werden.

Derartige Anbindungen der Luftleitelemente im Scharnierbereich sind jedoch im Allgemeinen aufwändig und auf spezielle Scharnier-Ausbildungen beschränkt. Weiterhin sind die einsetzbaren Luftleitelemente im Allgemeinen in ihrer Länge begrenzt. Bei einem Aufschwenken der Hecktüre um 270° nach vorne können komplexere Heckspoilerausbildungen, insbesondere bei Anwendung im Scharnierbereich, den Aufschwenkvorgang oftmals beeinträchtigen.

Weiterhin ist die Bedienung für den Verstellvorgang von der Grundstellung in die Fahrstellung, sowie auch für die Rückverstellung im Allgemeinen aufwändig. Ergänzend sind oftmals komplexe Arretierungen vorzusehen, um eine hinreichende Stabilität der unterschiedlichen Luftströmungen und Luftwirbel sicherzustellen.

Die US 8,136,868 B2 zeigt ein Heckspoilersystem für ein Fahrzeug, das statt schwenkbarer Hecktüren ein Rollladen-Verdeck aufweist. Hierbei ist eine Verstellung des Spoilers über vier Gelenken vorgesehen, die am Dach und einer heckseitigen Fahrzeugstruktur vorgesehen sind.

Weiterhin sind z. B. an PKW verstellbare Flügel bekannt, die jedoch zur beidseitigen Luftumströmung vorgesehen sind.

Die DE10222082 A1, DE 29909639 U1, DE 102004045382 A1, DE 102008053770 A1, DE 102006053150 A1, EP 0298205 B1, EP 0685385B1, EP 1601568 B1, EP 2098441 B1, US 4,749,220 A1 und WO 2005058677 A1 zeigen weitere Systeme.

Diese Systeme sind hierbei zum einen recht komplex aufgebaut und zum anderen umständlich zu verstellen. Weiterhin ist die Funktionalität des Fahrzeugs, insbesondere auch seine Zugänglichkeit, zum Teil beschränkt.

Der Erfindung liegt die Aufgabe zugrunde, eine Heckspoilereinrichtung zu schaffen, die mit relativ geringem Aufwand ausbildbar ist und eine sichere Verstellung zwischen Fahrstellung und Grundstellung ermöglicht.

Diese Aufgabe wird durch eine Heckspoilereinrichtung nach Anspruch 1 gelöst. Die Unteransprüche beschreiben bevorzugte Weiterbildungen.

Somit ist eine Vier-Gelenk-Kopplung oder Vier-Gelenk-Kopplungseinrichtung zur Verstellung des Luftleitelementes zwischen seiner Grundstellung und Fahrstellung vorgesehen. Die Vier-Gelenk-Kopplung ist vorzugsweise ausschließlich zwischen der Hecktüre und dem Luftleitelement vorgesehen.

Vorteilhafterweise weist die Vier-Gelenk-Kopplung genau vier Gelenke auf, d.h. vier Gelenkachsen. Hierdurch wird eine Zwangsführung des Luftleitelementes zwischen dessen Grundstellung und Fahrstellung ermöglicht, d.h. eine eindeutige Führung ohne zusätzlichen Freiheitsgrad. Die vier Gelenke bzw. Gelenkachsen der Vier-Gelenk-Kopplung können auch jeweils durch mehrere in der gleichen Gelenkachse angeordnete Gelenke gebildet werden, z. B. durch zwei in einer Gelenkachse angeordnete Gelenke oder zwei Schwingen mit jeweils z. B. zwei oder mehr Gelenken, die jedoch alle in der gemeinsamen Gelenkachse angeordnet sind.

Hierbei weist die Vier-Gelenk-Kopplung insbesondere mindestens eine Hauptschwinge größerer Länge und mindestens eine Nebenschwinge kürzerer Länge auf.

Somit wird eine sichere und eindeutige Führung des Luftleitelementes zwischen dessen eingelegter oder eingeklappter Grundstellung und der ausgefahrenen Fahrstellung zur Konturverlängerung ermöglicht. Die eindeutige kinematische Führung oder Zwangsführung der Vier-Gelenk-Kopplung ermöglicht einen sicheren, definierten Verstellvorgang ohne eine Fehlbedienung und vermeidet uneindeutige, für den Benutzer eventuell nicht erkennbar wirkende Verstellungen mit weiteren Freiheitsgraden. Die Verstellung ist weiterhin für den Benutzer einfach durchführbar; sie kann z. B. mit einer Hand durchgeführt werden.

Die Zwangsführung kann durch eine Federwirkung unterstützt werden. Die Federbelastung des jeweiligen Luftleitelementes kann insbesondere bistabil ausgeführt werden, und somit jeweils in die Grundstellung und die Fahrstellung wirken. Der Benutzer drückt somit von der Grundstellung ausgehend das Luftleitelement zunächst in einem ersten Schwenkbereich gegen die Federwirkung bis zu einem zwischenzeitlichen Totpunkt, von dem aus in einem zweiten Schwenkbereich ein selbständiger oder zumindest federunterstützter Aufschwenkvorgang in die Fahrstellung erfolgt, und umgekehrt zurück von der Fahrstellung in die Grundstellung. Hierdurch können Fehler in der Verstellung verhindert und die Bedienung erleichtert werden.

So kann eine Heckspoilereinrichtung mit ein oder zwei Seitenspoilereinrichtungen und ein oder zwei Dachspoilereinrichtungen sukzessive verstellt werden, indem z. B. zunächst die Seitenspoilereinrichtungen aufgestellt werden und nachfolgend die Dachspoilereinrichtungen verstellt werden, z. B. über ein Betätigungsmittel wie eine Betätigungsstange.

Die Arretierung der Seitenleitflächen kann, z. B. über umlegbare Bügel erfolgen, z. B. an den Nebenschwingen, insbesondere sowohl in der Fahrstellung als auch der Grundstellung.

In der eingeklappten Grundstellung kann z.B. das Seiten-Luftleitelement auf das heruntergeklappte Dach-Luftleitelement gelegt werden, so dass eine flache und platzsparende Aufnahme an der Hecktüre ermöglicht ist.

Die gesamte Heckspoilereinrichtung ist lediglich an der mindestens eine Hecktüre montierbar, d. h. ohne zusätzliche Anbindungen an einem Fahrzeugrahmen oder an einer Fahrzeugstruktur. Vorteilhafterweise kann die gesamte Heckspoilereinrichtung nur an einer Außenfläche der Hecktüre montiert werden. Bei einem Fahrzeug mit zwei nach außen aufschwenkbaren Hecktüren kann somit eine Heckspoilereinrichtung mit linker und rechter Seiten- und Dachspoilereinrichtung an den beiden Hecktüren montiert werden, z. B. nur an deren Außenflächen, d.h. ohne z. B. eine Oberkante der Hecktüren zu benötigen, wie es bei Kühlaufliegern z. B. nicht möglich ist.

Somit ist eine typ-unabhängige Anordnung vorgesehen. Vorzugsweise sind in der Grundstellung sowohl das Seiten-Luftleitelement als auch das Dach-Luftleitelement aus dem Türscharnierbereich hinaus geschwenkt, so dass ein maximaler Öffnungswinkel der Hecktür gegeben ist und ein Aufschwenken der mindestens einen Hecktüre um etwa 270° nach vorne nicht behindert wird. Die Hecktüre kann somit von ihrer geschlossenen Stellung vollständig nach vorne um etwa 270° vorgeschwenkt werden, wobei die eingeklappte Heckspoilereinrichtung flach an der Hecktüre oder beiden Hecktüren anliegt und somit zwischen der Hecktüre und der Seitenwand aufgenommen werden kann. Dieser Aufschwenkvorgang wird somit dadurch unterstützt, dass erfindungsgemäß keine aufwändigen komplexen Anbindungen im Scharnierbereich erforderlich sind, die bei einem derartigen Aufschwenkvorgang der Hecktüre störend wirken und große Öffnungswinkel behindern.

Die Kinematik der Vier-Gelenk-Kopplung ermöglicht einen Aufschwenkvorgang, bei dem das jeweilige Luftleitelement zunächst von der Hecktüre etwas nach hinten weggeschwenkt und dann mit seinem vorderen Ende zu der jeweiligen Kante, d. h. der Kante zwischen Seitenwand und Heckbereich oder Dach und Heckbereich, hin geschwenkt wird. Diese Kinematik der Vier-Gelenk-Kopplung weist gegenüber einem einfachen Schwenkvorgang um einen einzigen Drehpunkt deutliche Vorteile auf. So ist in der Fahrstellung z. B. auch eine Leitflächenverlängerung des Luftleitelementes nach vorne, d.h. über die Heckfläche hinaus möglich, z. B. seitlich an die Fahrzeugstruktur oder die Seitenwand, um einen Zwischenspalt zwischen dem Luftleitelement und der Fahrzeugstruktur oder der Seitenwand zu überdecken. Hierdurch kann die Aerodynamik deutlich verbessert und der Luftwiderstand deutlich gesenkt werden und z. B. auch störende Windgeräusche in dem Spalt verhindert werden.

Grundsätzlich ist auch in der Fahrstellung ein teilweises Öffnen der Hecktüren möglich, z. B. um 90°, da die Teile der Heckspoilereinrichtung mitschwenken. Dies ist insbesondere bei Ausbildung ohne Leitflächenverlängerung möglich.

Die Anbringung an der Hecktüre kann lediglich von außen bzw. von hinten erfolgen, ohne z. B. in Oberkanten der Hecktüre weitere Elemente anbringen zu müssen. Die Luftleitelemente können formschlüssig mit den Fahrzeugflächen, d. h. der Seitenwand oder dem Dach, anschließen.

Durch die Zwangsführung der Vier-Gelenk-Kopplung wird auch der Einsatz von Luftleitelementen mit geringerer Steifigkeit ermöglicht, da Verformungen in der Aufstellkinematik verhindert werden können. Die Vier-Gelenk- Kopplung ermöglicht weiterhin auch eine steife Anbindung in sämtlichen Stellungen, ohne z. B. Klappern oder Vibrieren der Teile.

Durch die Anbindung an lediglich der Hecktüre wird auch eine nachträgliche Montierbarkeit ermöglicht; die Heckspoilereinrichtung kann z. B. auch an Kühlaufliegern und anderen Nutzfahrzeugen angebracht werden. In der Grundstellung wie auch in der Fahrstellung ist das Durchfahren von Waschstraßen möglich ohne Beschädigung der Heckspoilereinrichtung.

Im eingeklappten Grundzustand liegen die Schwingen vorteilhafterweise direkt auf der Hecktüre und das jeweilige Luftleitelement zumindest bereichsweise auf den Schwingen. Vorzugsweise liegt das Seiten- Luftleitelement auf dem Dach-Luftleitelement.

Indem die Seitenspoilereinrichtung zur Konturverlängerung der Seitenwand des Fahrzeugs vier vertikal verlaufende Gelenkachsen aufweist, ist das Seiten-Luftleitelement vorzugsweise in jeder Schwenkstellung vertikal ausgerichtet. Entsprechend kann die die Dachspoilereinrichtung zur Konturverlängerung des Dachs lediglich vier horizontal verlaufende Gelenkachsen aufweisen, so dass das das Dach-Luftleitelement jeweils horizontal verläuft. somit sind klare Schwenkwege und Ausrichtungen vorgesehen; die einzelnen Teile schwenken oder kippen nicht in komplexeren Schwenkbahnen, die gegebenenfalls zu Verletzungen des Benutzers führen können.

Die zusätzlich erforderlichen Mittel, d. h. die Schwingen und die Gelenke, sind relativ einfach ausgebildet und können z. B. als Metallplatten und übliche Gelenke ausgebildet werden. Grundsätzlich können für die linke und rechte Ausbildung gleiche Bauteile verwendet werden, die z. B. bei der Anbringung links und rechts jeweils um 180° bzw. oben und unten vertauscht werden.

Die Erfindung wird im Folgenden anhand der beiliegenden Zeichnungen an einigen Ausführungsformen näher erläutert. Es zeigen:
- Fig. 1: einen Heckbereich eines Fahrzeugs mit einer Heckspoilereinrichtung gemäß einer Ausführungsform der Erfindung in Grundstellung;
- Fig. 2: einen ersten Zwischenschritt zur Aufstellung der linken Seitenleitfläche;
- Fig. 3: einen auf Fig. 2 folgenden zweiten Zwischenschritt der Aufstellbewegung der linken Seitenleitfläche;
- Fig. 4: den Heckbereich bei vollständig aufgestellter linker Seitenleitfläche und eingeklappten weiteren Leitflächen;
- Fig. 5: den Heckbereich des Fahrzeugs bei vollständig aufgestellter linker Seitenleitfläche und Dachleitfläche;
- Fig. 6: eine der Fig. 5 entsprechende Darstellung bei vollständig aufgestellter rechter Seitenleitfläche;
- Fig. 7: den Heckbereich des Fahrzeugs in Fahrstellung;
- Fig. 8: eine weitere Ausführungsform einer Heckeinrichtung in Fahrstellung ohne Leitflächenverlängerung;
- Fig. 9: eine der Fig. 7 entsprechende Darstellung bei Durchsicht oder transparenter Ausbildung der Leitflächen;
- Fig. 10: die Grundstellung der rechten Seitenleitfläche in Draufsicht;
- Fig. 11: die erste Zwischenstellung der rechten Seitenleitfläche entsprechend Fig. 2 in Draufsicht;
- Fig. 12: die Fahrstellung der rechten Seitenleitfläche in Draufsicht;
- Fig. 13: eine der Fig. 12 entsprechende Darstellung bei der Ausführungsform ohne Leitflächenverlängerung entsprechend Fig. 8;
- Fig. 14: den rechten Heckbereich des Fahrzeugs in Draufsicht, in Grundstellung bei vorgeklappter Hecktüre.

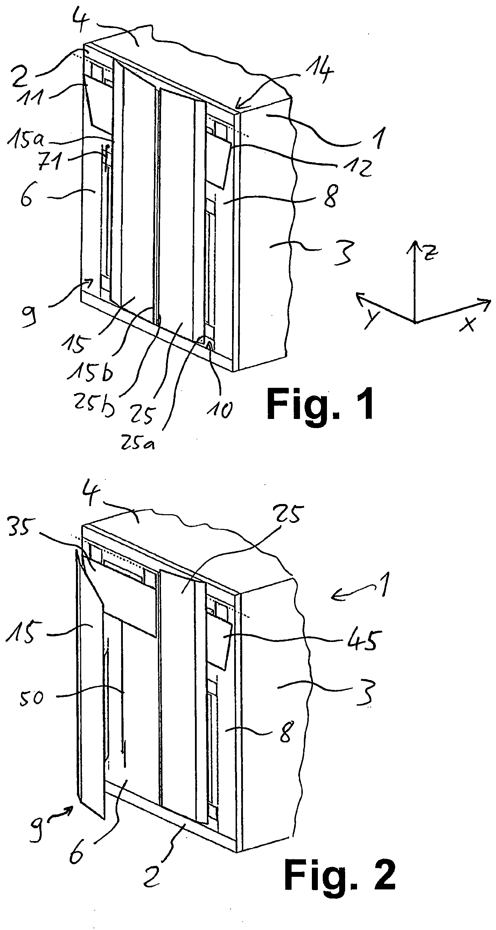

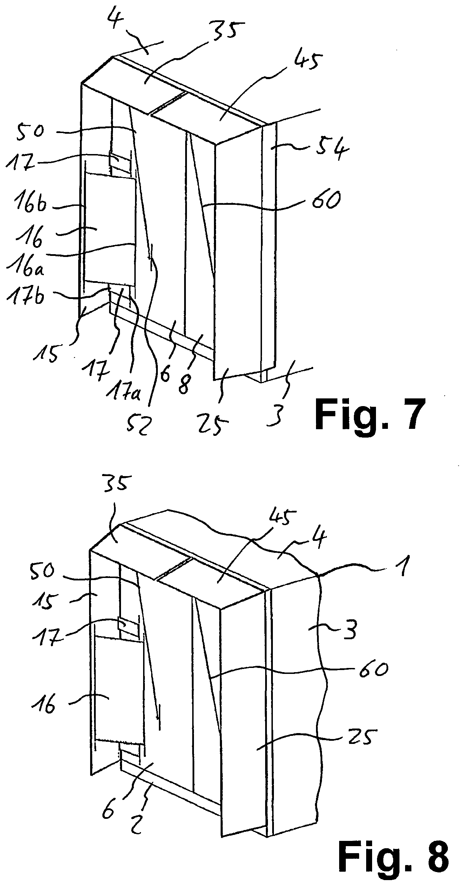

Fig. 1 zeigt einen Heckbereich eines Fahrzeugs 1, insbesondere eines Nutzfahrzeugs 1 bzw. LKWs mit einer Fahrzeugstruktur 2, die hier insbesondere ein Fahrzeugrahmen bzw. hinteres Fahrzeugportal darstellt, Seitenwänden 3, einem Dach 4 und einer (in Fahrtrichtung) linken Hecktüre 6 sowie einer rechten Hecktüre 8. An der linken Hecktüre 6 sind eine linke Seitenspoilereinrichtung 9 und eine linke Dachspoilereinrichtung 11 befestigt, die jeweils zwischen einer eingeklappten Grundstellung und einer ausgeklappten oder ausgefahrenen Fahrstellung verstellbar sind; entsprechend sind an der rechten Hecktüre 8 eine rechte Seitenspoilereinrichtung 10 und eine rechte Dachspoilereinrichtung 12 angebracht und zwischen einer eingeklappten Grundstellung und einer ausgeklappten oder ausgefahrenen Fahrstellung verstellbar. Die beiden Seitenspoilereinrichtungen 9, 10 und die beiden Dachspoilereinrichtungen 11, 12 bilden zusammen eine Heckspoilereinrichtung 14, die somit zwischen einer in Fig. 1 gezeigten Grundstellung und einer in Fig. 7 gezeigten Fahrstellung zur Konturverlängerung verstellbar ist.

Die linke Seitenspoilereinrichtung 9 weist ein linkes Seiten-Luftleitelement 15, eine Hauptschwinge 16 und mindestens eine Nebenschwinge 17 auf, die jeweils zwischen der linken Hecktüre 6 und dem Seiten-Luftleitelement 15 angelenkt sind. Die Hauptschwinge 16 ist mit einem Ende somit in einem vorderen Gelenk 16a in einer Gelenkachse A an der linken Hecktüre 6, und mit ihrem anderen Ende über ein hinteres Gelenk 16b in einer Gelenkachse C an dem linken Seiten-Luftleitelement 15 angelenkt. Die Längserstreckung bzw. erste Länge I1 des linken Seiten-Luftleitelementes 15 wird somit durch den Abstand ihrer Gelenke 16a, 16b und somit der Gelenkachsen A und C bestimmt. Statt einer Hauptschwinge 16 können auch zwei Hauptschwingen 16 vertikal übereinander, d. h. mit fluchtenden vorderen Gelenken 16a und fluchtenden hinteren Gelenken 16b vorgesehen sein; relevant ist, dass jeweils eine vordere Gelenkachse A und eine hintere Gelenkachse C ausgebildet wird.

Die mindestens eine Nebenschwinge 17 ist entsprechend in einem vorderen Gelenk 17a in einer vorderen Gelenkachse B an der linken Hecktüre 6 und einem hinteren Gelenk 17b in einer hinteren Gelenkachse D an dem Seiten-Luftleitelement 15 angelenkt. Bei der gezeigten Ausführungsform sind zwei Nebenschwingen 17 vertikal übereinander mit fluchtenden Gelenken 17a in der gemeinsamen vorderen Gelenkachse B und fluchtenden Gelenken 17b in einer gemeinsamen hinteren Gelenkachse D vorgesehen; grundsätzlich kann auch nur eine einzige Nebenschwinge vorgesehen sein. Die Längserstreckung der Nebenschwinge 17 wird somit durch den Abstand ihrer Gelenke 17a und 17 b, d.h. der Gelenkachsen B und D bestimmt und ist als L2 eingezeichnet. Hierbei gilt L1 > L2, d. h. die Hauptschwinge 16 ist länger als die mindestens eine Nebenschwinge 17.

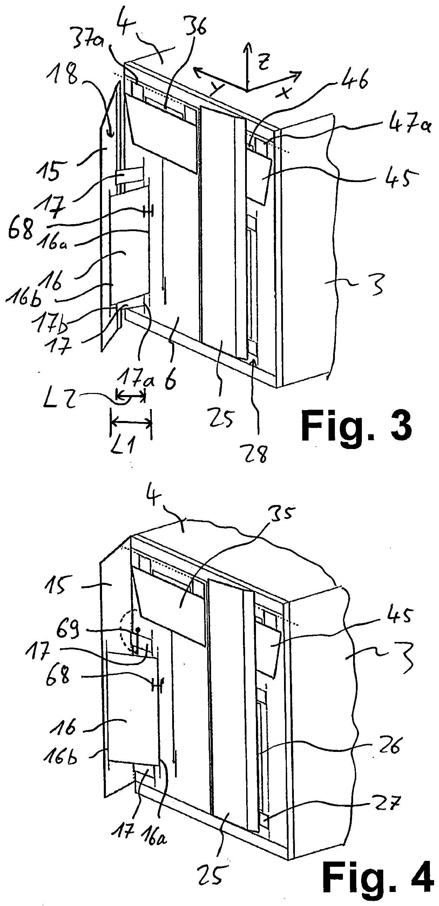

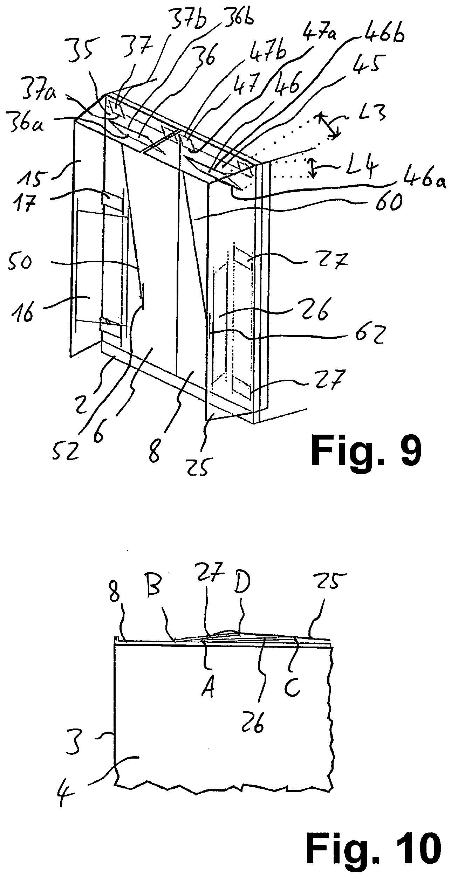

Weiterhin sind die Gelenkachsen A und B in Querrichtung bzw. Y-Richtung an der linken Hecktüre 6 zueinander versetzt; entsprechend sind auch die hinteren Gelenkachsen C und D an dem Seiten-Luftleitelement 15 in Querrichtung bzw. Y-Richtung zueinander versetzt. Vorteilhafterweise sind die Gelenkachsen B und D der Nebenschwinge 17 in Y-Richtung bzw. Querrichtung weiter außen, d. h. zur linken Seitenwand 3 hin vorgesehen als die Gelenkachsen A und C der Hauptschwinge 16. Somit bilden die Schwingen 16, 17 mit ihren Gelenken 16a, 16b, 17a, 17b bzw. die Gelenkachsen A, B, C, D ein Vier-Gelenk-Getriebe bzw. eine Vier-Gelenk-Kopplung 18 zwischen der linken Hecktüre 6 und dem linken Seiten-Luftleitelement 15, die somit eine Zwangsführung zwischen der in Fig. 1 gezeigten Grundstellung und der in Fig. 4 bis 9 gezeigten Fahrstellung sicherstellt. Dies ist insbesondere auch aus den Draufsichten der Fig. 10 bis 12 bei der rechten Seitenspoilereinrichtung 10 ersichtlich, in denen die selben Gelenkachs-Bezeichnungen A, B, C, D verwendet sind. Zu den Gelenkausbildungen im Einzelnen:

In der Grundstellung der Fig. 1 liegt das Seiten-Luftleitelement 15 im Wesentlichen parallel zur linken Hecktüre 6, wobei die beiden Schwingen 16 und 17 ebenfalls im Wesentlichen parallel verlaufen und somit flach zwischen der Hecktüre 6 und dem Seiten-Luftleitelement 15 aufgenommen sind. Zur ungestörten Klappbewegung sind daher die beiden Nebenschwingen 17 auch in vertikaler Richtung bzw. Z-Richtung etwas zu der Hauptschwinge 16 versetzt, insbesondere wie gezeigt, indem eine Nebenschwinge 17 oberhalb und die andere Nebenschwinge 17 unterhalb der Hauptschwinge 16 vorgesehen sind, so dass sämtliche Klapp- und Schwenkbewegungen ohne gegenseitige Beeinflussung der Hauptschwinge 16 und der beiden Nebenschwingen 17 erfolgen können.

In der Grundstellung der Fig. 1 sind somit die beiden linken Schwingen 16 und 17 derartig eingeschwenkt, dass ihre hinteren Gelenke 16b und 17b zur Mitte, d. h. von der linken Seitenwand 3 hin weggeschwenkt, so dass das vordere Gelenk 16a weiter außen als das hintere Gelenk 16b und entsprechend das vordere Gelenk 16a in Querrichtung bzw. Y-Richtung weiter außen als das hintere Gelenk 17b angeordnet sind. In dieser Grundstellung liegt das linke Seiten-Luftleitelement 15 flach auf den Schwingen 16, 17 und somit im Wesentlichen parallel zur geschlossenen linken Hecktüre 6 auf.

Vorteilhafterweise ist eine bistabile Federeinrichtung 68 vorgesehen, die die Vier-Gelenk-Kopplung 18 jeweils entweder in die Grundstellung oder in die Fahrstellung drückt, z. B. mit einem Totpunkt in der Position der Fig. 2 oder 3.

Die Grundstellung kann ergänzend arretiert sein, z. B. durch die in Fig. 1 eingezeichnete Arretierung 71, die z. B. als schwenkbarer Bügel an der Hecktüre 6 montiert werden kann, z. B. mit dem Lagerbock des vorderen Gelenkes 17a, um eine flach aufliegende Nebenschwinge 17 zu arretieren.

Von Fig. 1 ausgehend wird zur Verstellung in die Fahrstellung das linke Seiten-Luftleitelement 15 nach hinten geschwenkt, wobei die Fig. 2 und 3 rein beispielhaft Zwischenstellungen (ohne besondere Funktion) zeigen: In der ersten Zwischenstellung der Fig. 2 mit Ausstellbewegung um etwa 40% entfernt sich somit das linke Seiten-Luftleitelement 15 von der Hecktüre 6 nach hinten, wobei aufgrund der geringeren zweiten Länge L2 der weiter außen (in Y-Richtung außen) angelenkte Nebenschwinge 17 ein vorderes Ende 15a des linken Seiten-Luftleitelementes 15 eine kleine Schwenkbewegung bzw. Schwenkbewegung mit kleinerem Radius vollführt als das hintere Ende 15b. Über die zweite Zwischenstellung der Fig. 3 gelangt das Seiten- Luftleitelement 15 somit in die vollständig aufgestellte oder ausgeklappte Fahrstellung der Fig. 4, in der vorteilhafterweise die beiden Nebenschwingen 17 wiederum flach auf der linken Hecktüre 6 aufliegen; die Nebenschwingen 17 führen somit vorteilhafterweise eine Schwenkbewegung mit einem Schwenkwinkel α2=180° durch. Die Hauptschwinge 16 führt hingegen eine kleinere Schwenkbewegung mit einem Schwenkwinkel α1< α2, z. B. α1 zwischen 90° und 180° durch, so dass das hintere Ende 15b des linken Seiten- Luftleitelementes 15 nicht genau in Längsrichtung bzw. X-Richtung ausgerichtet ist, sondern etwas zur lateralen Mitte bzw. in Y-Richtung zur Mitte hin steht.

Die - der Übersichtlichkeit halber nur in einigen Figuren eingezeichneten Federeinrichtungen 68, z. B. Gasdruckfedern 68 - können bei z. B. der linken Seitenspoilereinrichtung 9 z. B. zwischen der Hecktüre 6 und dem Seiten-Luftleitelement 15 oder vorzugsweise unter Einbeziehung der Schwingen 16 und 17 ausgebildet sein; so können z. B. für die linke Seitenspoilereinrichtung 9 eine Federeinrichtung 68 zwischen der Hauptschwinge 16 und deren vorderen Gelenk 16a bzw. dem türseitig zu befestigen Lagerbock des vorderen Gelenks 16a vorgesehen sein, entsprechend auch für die anderen Spoilereinrichtungen 10, 11, 12.

Die Federeinrichtung 68 wirkt von Fig. 1 ausgehend zunächst gegen die Verstellbewegung und unterstützt den Benutzer in der Endphase der Verstellung, so dass lediglich die Grundstellung und Fahrstellung eingestellt werden können, nicht aber Zwischenstellungen.

Alternativ zu der oben beschriebenen Ausbildung können die Hauptschwinge 16 und die Nebenschwingen 17 in der Grundstellung auch teilweise aufeinander zur Auflage kommen, wie es aus der Draufsicht der Fig. 10 bezüglich der rechten Seitenspoilereinrichtung 10 gezeigt ist.

Die rechte Seitenspoilereinrichtung 10 ist entsprechend der linken Seitenspoilereinrichtung 9 ausgebildet, d. h. in den Figuren entsprechend symmetrisch bzw. gespiegelt hierzu, mit einem rechten Seiten-Luftleitelement 25, einer rechten Hauptschwinge 26 der ersten Länge L1, mit einem vorderen Gelenk 26a und einem hinteren Gelenk 26b, und zwei Nebenschwingen 27 mit jeweils vorderem Gelenk 27a und hinterem Gelenk 27b, wobei die vorderen Gelenke 27a der beiden Nebenschwingen 27 fluchten und entsprechend die hinteren Gelenke 27b der beiden Nebenschwingen 27 fluchten.

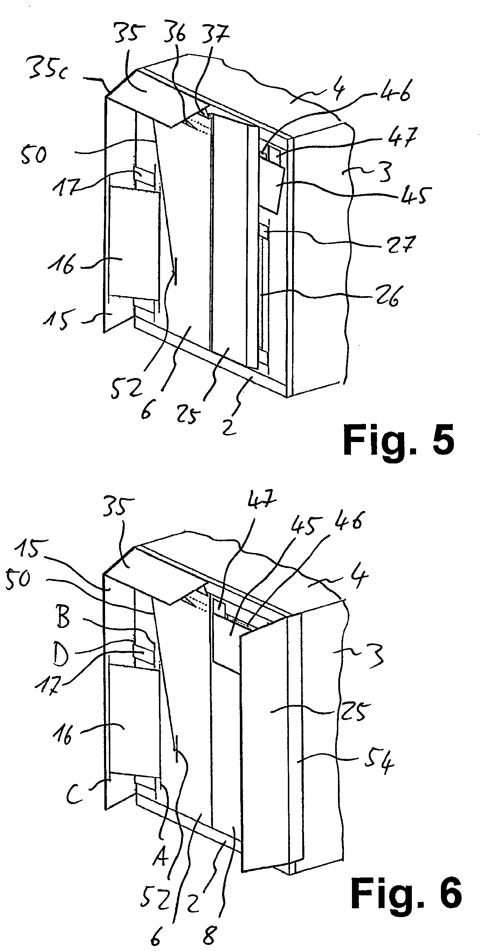

Die linke Dachspoilereinrichtung 11 ist entsprechend wieder über eine Vier-Gelenk-Kopplung 38 an der linken Hecktüre 6 angelenkt, mit einer Hauptschwinge 36 einer dritten Länge L3 und mindestens einer Nebenschwinge 37 einer vierten Länge L4, wobei L3 > L4. Bei der gezeigten Ausführungsform erfolgt die Vier-Gelenk-Kopplung 38 wiederum mit einer Hauptschwinge 36 und zwei fluchtend angelenkten, parallelen Nebenschwingen 37, so dass sich wieder eine Vier-Gelenk-Kopplung 38 entsprechend den Vier-Gelenk-Kopplungen 18 und 28 der Seitenspoilereinrichtungen 9 und 10 ausbildet, so dass eine Zwangsführung des linken Dach-Luftleitelementes 35 von der Grundstellung der Fig. 1 bis 4 in die Fahrstellung der Fig. 5 bis 9 ergibt. Die Anordnung der vorderen Gelenke 36a und 37a der Hauptschwinge 36 und der Nebenschwinge 37 und die Längen L3 und L4 können derartig gewählt werden, dass ein gewünschter Aufstell-Winkel des linken Dach- Luftleitelementes 35 erreicht wird.

Entsprechend ist die rechte Dachspoilereinrichtung 12 mit einem rechten Dach-Luftleitelement 46, einer rechten Dach-Hauptschwinge 46 und zwei rechten Dach-Nebenschwingen 47 ausgebildet, mit gleicher geometrischer Ausbildung entsprechend der linken Dachspoilereinrichtung 11, d. h. mit gleichen L3 und L4, wobei hier vorteilhafterweise die vorderen Gelenke 36a und 46a, sowie 37a und 47a, und entsprechend auch in der Fahrstellung die hinteren Gelenke 36b und 46b, sowie entsprechend 37b und 47b, fluchten.

Die Arretierung der linken Seitenspoilereinrichtung 9 in der Fahrstellung erfolgt entweder über einen umlegbaren Riegel oder eine andere Arretierung 69, wie z. B. die in Fig. 4 angedeutete Arretierung 69 der Nebenschwinge 17, da diese in der Fahrstellung flach an der Hecktüre 6 anliegt und somit die Arretierung 69 als Bügel an der Hecktüre 6 angebracht werden kann, z. B. als weiteres Bauteil oder zusammen mit dem vorderen Gelenk 17a der Nebenschwinge 17; entsprechend ist dies auch bei der rechten Seitenspoilereinrichtung 10 möglich. Auch die Arretierung 71 für die Fahrstellung kann zusammen mit dem vorderen Gelenk 17a bzw. deren Lagerbock an der Hecktüre 6 montiert werden, sodass eine einfache Montage möglich ist.

Weiterhin ist eine Arretierung der linken Seitenspoilereinrichtung 9 auch über das linke Dach-Luftleitelement 35 in dessen ausgefahrener Stellung, so dass dieses z. B. mit seiner rechten Kante 35c an der Innenseite oder der oberen Kante des linken Seiten-Luftleitelementes 15 anliegt, und somit dessen Einschwenkbewegung blockiert.

Die Arretierung der linken Dachspoilereinrichtung 11 wiederum erfolgt vorteilhafterweise durch zusätzliche mechanische Arretiermittel, z. B. eine Betätigungsstange 50, die zunächst zum Hochklappen des linken Dach- Luftleitelementes 35 verwendet wird und nach dem Hochklappen an der Hecktüre 6 in einer Verriegelungseinrichtung 52 arretiert wird, vorteilhafterweise unter einem geeigneten Winkel gegenüber der linken Hecktüre 6, um eine stabile Dreiecks-Ausbildung zu gewährleisten.

Somit wird an jeder Hecktüre 6, 8 zunächst die jeweilige Seitenspoilereinrichtung 9 bzw. 10 von der Grundstellung in die Fahrstellung verstellt, was von dem Benutzer, z. B. dem Fahrer, manuell durch Rückwärts-Schwenken des linken Seiten-Luftleitelementes 15 bzw. des rechten Seiten-Luftleitelementes 25 erfolgen kann, da dieses durch die jeweilige Vier-Gelenk-Kopplung 18 bzw. 28 zwangsgeführt ist und somit ohne Aufwand in die jeweilige Fahrstellung verschwenkt werden kann, vorteilhafterweise mit Unterstützung der Federeinrichtung in der Endphase der Schwenkbewegung. Dann kann die Arretierung durch Umlegen der Arretierung 69 erfolgen.

Dann ergreift der Benutzer die Betätigungsstange 50 und klappt das jeweilige Dach- Luftleitelement 35 bzw. 45 nach oben in dessen aufgeklappte Fahrstellung, in der es das jeweilige Seiten-Luftleitelement 15 bzw. 25 in dessen Fahrstellung arretiert, und verriegelt die Druckstange 50 bzw. 60 in einer Arretierung 52 bzw. 62. Auch die Dachspoilereinrichtungen 11 und 12 können durch Federeinrichtungen federvorgespannt sein; hier ist aber auch eine Ausbildung ohne Federwirkung möglich, um die anfängliche Verstellung gegen die Gewichtskraft nicht zusätzlich zu erschweren, wobei die Fahrstellung durch die Arretierung ohnehin festgelegt ist.

Gemäß der Ausbildung der Fig. 7 weisen die Seiten-Luftleitelemente 15 und 25 Leitflächenverlängerungen 54 auf, die in X-Richtung über die Hecktüren 6 und 8 nach vorne ragen, um einen Spalt 55 zu den Seitenwänden 3 des Fahrzeugs 1 abzudecken. Die Leitflächenverlängerungen 54 können somit z. B. seitlich an der Fahrzeugstruktur 2 oder den Seitenwänden 3 anliegen. Die Vier-Gelenk-Kopplungen 18 und 28 ermöglichen hierbei eine geeignete Schwenkbewegung, bei der die Leitflächenverlängerungen 54 in der Endphase nicht an die Hecktüren 6, 8 oder die Fahrzeugstruktur 2 stoßen.

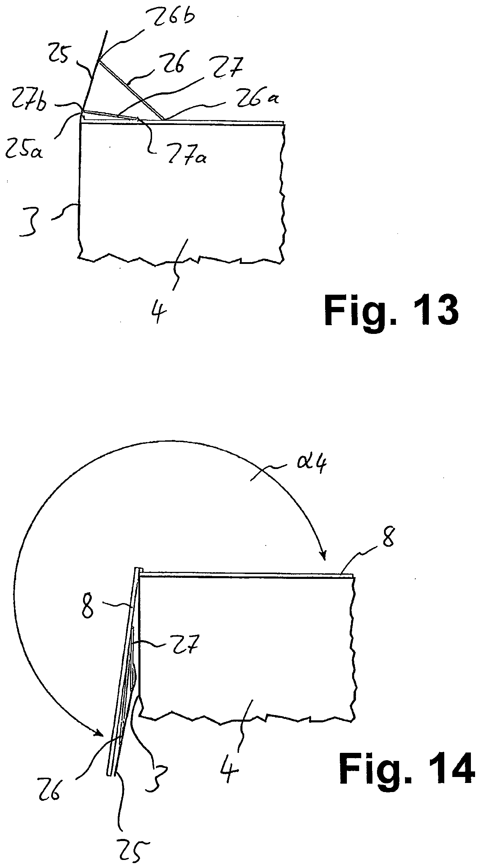

Fig. 8 zeigt eine entsprechende Ausführungsform ohne derartige Leitflächenverlängerungen 54, so dass die vorderen Enden 15a und 25a der Seiten-Luftleitelemente 15 und 25 in Längs-Richtung (X-Richtung) im Wesentlichen auf gleicher Höhe mit den vorderen Gelenken 16a, 17a, 26a, 27a, 36a, 37a, 46a, 47a liegen. Fig. 13 zeigt eine Draufsicht auf diese Ausführungsform, d. h. ohne Leitflächenverlängerungen 54.

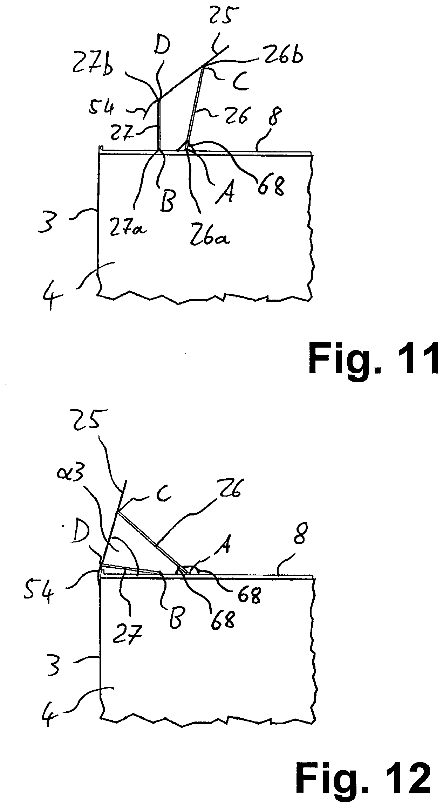

Die Fig. 11 und 12 zeigen den Aufschwenkvorgang entsprechend Fig. 2, 3 in Draufsicht.

Sämtliche Leitelemente 15, 25, 35, 45 können plan bzw. eben, oder auch gekrümmt ausgebildet sein. Der Aufstellwinkel ergibt sich aus der Geometrie der Leitelemente 15, 25, 35, 45 und der Schwingen 16, 17, bzw. entsprechend 26, 27, 36, 37, 46, 47, wie insbesondere auch aus der Draufsicht der Fig. 12 und 13 erkennbar ist. Somit können die Aufstellwinkel grundsätzlich beliebig ausgebildet werden.

Von der Grundstellung der Fig. 1 ausgehend können beide Hecktüren 6 und 8 vollständig auf- und vorgeschwenkt werden, wie aus der Draufsicht der Fig. 14 ersichtlich ist. Somit ist eine übliche Öffnung mit einem Öffnungswinkel a4 von 270°bzw. fast 270° möglich. Die gesamte Heckspoilereinrichtung 14 bzw. gemäß Fig. 14 die rechte Seitenspoilereinrichtung 10 und die rechte Dachspoilereinrichtung 12 sind hierbei eingeklappt und liegen daher flach an, so dass sie zwischen der aufklappenden Hecktüre 8 und der Seitenwand 3 aufgenommen werden können, ohne den Aufschwenkvorgang bzw. Öffnungswinkel wesentlich zu beeinträchtigen.

Sämtliche Leitelemente 15, 25, 35, 45 können kostengünstig aus Kunststoff ausgebildet sein. Die Schwingen 16, 17, 26, 27, 36, 37, 46, 47 können aus einem beliebigen Material, z. B. zur Ausbildung einer hohen Stabilität aus Metall ausgebildet sein.

## Patentansprüche

1. Heckspoilereinrichtung (14) für ein mindestens eine schwenkbare Hecktür (6, 8) aufweisendes Fahrzeug (1), wobei die Heckspoilereinrichtung (14) mindestens aufweist:
ein Luftleitelement (15, 25, 35, 45), das zwischen einer Grundstellung und einer Fahrstellung zur Konturverlängerung und aerodynamischen Luftleitung verstellbar ist, und
eine Stützeinrichtung (18, 28, 38, 48) zum Abstützen des Luftleitelementes (15, 25, 35, 45) in dessen Fahrstellung, wobei die Heckspoilereinrichtung vollständig an einer Hecktür (6) oder beiden Hecktüren (6, 8) anbringbar ist,
**dadurch gekennzeichnet, dass**
die Stützeinrichtung eine Vier-Gelenk-Kopplung (18, 28, 38, 48) aufweist mit mindestens vier Gelenken oder Gelenkachsen (A, B, C, D) zur Verstellung des Luftleitelementes (15, 25, 35, 45) zwischen der Grundstellung und der Fahrstellung.

2. Heckspoilereinrichtung (14) nach Anspruch 1, **dadurch gekennzeichnet, dass** die Vier-Gelenk-Kopplung (18, 28, 38, 48) genau vier Gelenkachsen (A, B, C, D) aufweist.

3. Heckspoilereinrichtung (14) nach Anspruch 1 oder 2, **dadurch gekennzeichnet, dass** die vier Gelenkachsen (A, B, C, D), in denen das Luftleitelement (15, 25, 35, 45) verstellbar ist, parallel verlaufen, vorzugsweise vertikal oder horizontal.

4. Heckspoilereinrichtung (14) nach einem der vorherigen Ansprüche, **dadurch gekennzeichnet, dass** die Vier-Gelenk-Kopplung (18, 28, 38, 48) eine Zwangsführung zur Verstellung des Luftleitelementes (15, 25, 35, 45) zwischen dessen Grundstellung und Fahrstellung ausbildet.

5. Heckspoilereinrichtung (14) nach einem der vorherigen Ansprüche, **dadurch gekennzeichnet, dass** die Vier-Gelenk-Kopplung (18, 28, 38, 48) aufweist:
mindestens eine Hauptschwinge (16, 26, 36, 46) mit einer größeren Länge (L1, L3) und mindestens eine Nebenschwinge (17, 27, 37, 47) mit einer kleineren Länge (L2, L4),
wobei die Hauptschwinge (16, 26, 36, 46) und die Nebenschwinge (17, 27, 37, 47) jeweils ein vorderes Gelenk (16a, 17a, 26a, 27a, 36a, 37a, 46a, 47a) zur Anbindung an der Hecktüre (6, 8) und ein hinteres Gelenk (16b, 17b, 26b, 27b, 36b, 37b, 46b, 47b) aufweisen, mit dem die Hauptschwinge (16) und die Nebenschwinge (17) jeweils an dem Luftleitelement (15, 25, 35, 45) angelenkt sind.

6. Heckspoilereinrichtung (14) nach Anspruch 5, **dadurch gekennzeichnet, dass** das vordere Gelenk (17a, 27a, 37a, 47a) der Nebenschwinge (17, 27, 37, 47) weiter außen zu einer Seitenwand (3) oder dem Dach (4) des Fahrzeugs (1) hin an der Hecktüre (6, 8) angebunden ist als das vordere Gelenk (16a, 26a, 36a, 46a) der Hauptschwinge (16, 26, 36, 46).

7. Heckspoilereinrichtung (14) nach Anspruch 5 oder 6, **dadurch gekennzeichnet, dass** das hintere Gelenk (17b, 27b, 37b, 47b) der Nebenschwinge (17, 27, 37, 47) weiter außen an dem Luftleitelement (15, 25, 35, 45) angebunden ist als das hintere Gelenk (16b, 26b, 36b, 46b) der Hauptschwinge (16, 26, 36, 46).

8. Heckspoilereinrichtung (14) nach einem der Ansprüche 5 bis 7, **dadurch gekennzeichnet, dass** ein erster Schwenkwinkel (α1) der Hauptschwinge (16, 26, 36, 46) kleiner als ein zweiter Schwenkwinkel (α2) der Nebenschwinge (17, 27, 37, 47) ist.

9. Heckspoilereinrichtung (14) nach einem der Ansprüche 5 bis 8, **dadurch gekennzeichnet, dass** das Luftleitelement (15, 25, 35, 45) in der Grundstellung flach auf der Nebenschwinge (17, 27, 37, 47) und der Hauptschwinge (16, 26, 36, 46) und im Wesentlichen parallel zu der Hecktüre (6, 8) aufliegt und in der Fahrstellung unter einem Fahrstellungs-Winkel (a3), der größer als 0° und kleiner als 90° ist, von der Hecktüre (6, 8) absteht.

10. Heckspoilereinrichtung (14) nach einem der Ansprüche 5 bis 9, **dadurch gekennzeichnet, dass** er zwei Nebenschwingen (17, 27. 37, 47) mit in einer gemeinsamen Gelenkachse (B) liegenden vorderen Gelenken (17a, 27a, 37a, 47a) und in einer gemeinsamen Gelenkachse (D) liegenden hinteren Gelenken (17b, 27b, 37b, 47b) und eine zwischen den Nebenschwingen (17) angeordnete Hauptschwinge (16) aufweist, zur überdeckungsfreien Auflage an der Hecktüre (6, 8) in der Grundstellung.

11. Heckspoilereinrichtung (14) nach einem der vorherigen Ansprüche, **dadurch gekennzeichnet, dass** das Luftleitelement (15, 25) mit seinem vorderen Ende (15a, 25a) eine Konturverlängerung (54) aufweist, die sich in der Fahrstellung über eine Fahrzeugstruktur (2) des Heckbereichs oder bis zu einer Seitenwand (3) des Fahrzeugs (1) erstreckt, zur Überbrückung eines Zwischenspaltes.

12. Heckspoilereinrichtung (14) nach einem der vorherigen Ansprüche, **dadurch gekennzeichnet, dass** sie ein Seiten-Luftleitelement (15, 25) zur Konturverlängerung einer Seitenwand (3) des Fahrzeugs (1) aufweist, mit vertikal verlaufenden Gelenkachsen (A, B, C, D).

13. Heckspoilereinrichtung (14) nach einem der vorherigen Ansprüche, **dadurch gekennzeichnet, dass** sie ein Dach-Luftleitelement (35, 45) zur Konturverlängerung eines Dachs (4) des Fahrzeugs (1) aufweist, mit horizontal verlaufenden Gelenkachsen.

14. Heckspoilereinrichtung (14) nach einem der vorherigen Ansprüche, **dadurch gekennzeichnet, dass** Arretierungen (71, 69, 52, 62) für die Grundstellung und/oder Fahrstellung zur Montage an der mindestens einen Hecktüre (6, 8) vorgesehen sind.,

15. Heckspoilereinrichtung (14) nach einem der vorherigen Ansprüche, **dadurch gekennzeichnet, dass** sie mindestens eine Federeinrichtung (68) aufweist, die das mindestens eine Luftleitelement (15, 25, 35, 45) in einem ersten Schwenkbereich in die Grundstellung und in einem zweiten Schwenkbereich in die Fahrstellung drückt, insbesondere als bistabile Anordnung mit einem Totpunkt zwischen dem ersten Schwenkbereich und zweiten Schwenkbereich.

16. Heckspoilereinrichtung (14) nach einem der vorherigen Ansprüche, **dadurch gekennzeichnet, dass** sie eine linke Seitenspoilereinrichtung (9) und linke Dachspoilereinrichtung (11) zur Anbringung an einer linken Hecktüre (6) des Fahrzeugs (1) und eine rechte Seitenspoilereinrichtung (10) und rechte Dachspoilereinrichtung (12) zur Anbringung an einer rechten Hecktüre (8) des Fahrzeugs (1) aufweist,
wobei die Heckspoilereinrichtung (14) in ihrer Grundstellung bei Schwenken der beiden Hecktüren (6, 8) nach vorne und Anlage an den Seitenwänden (3) des Fahrzeugs (1) zwischen den Hecktüren (6, 8) und den Seitenwänden (3) aufnehmbar ist.

17. Fahrzeug (1) mit einer Heckspoilereinrichtung (14) nach Anspruch 16, wobei das Fahrzeug (1) zwei schwenkbare Hecktüren (6, 8) aufweist, die um mehr als 180°, insbesondere etwa 270°, nach vorne aufschwenkbar sind,
wobei die Heckspoilereinrichtung (14) lediglich an den Hecktüren (6, 8) angebracht ist, und
in der Grundstellung der Heckspoilereinrichtung (14) die Hecktüren (6, 8) an den Seitenwänden (3) des Fahrzeugs (1) befestigbar sind, wobei die Heckspoilereinrichtung (14) zwischen den Seitenwänden (3) und den Hecktüren (6, 8) aufnehmbar ist.

## Claims

1. Rear spoiler device (14) for a vehicle (1) comprising at least one pivoted rear door (6, 8), wherein the rear spoiler device (14) comprises at least:
one air deflector element (15, 25, 35, 45), which is adjustable between a basic position and a drive position for extending the contour and aerodynamic air deflection, and
one support device (18, 28, 38, 48) for supporting the air deflector element (15, 25, 35, 45) in its drive position, wherein the rear spoiler device can be fitted in its entirety to a rear door (6) or two rear doors (6, 8),
**characterized in that**
the support device comprises a four-bar linkage (18, 28, 38, 48) having at least four joints or joint axes (A, B, C, D) for adjusting the air deflector element (15, 25, 35, 45) between the basic position and the drive position.

2. Rear spoiler device (14) according to Claim 1, **characterized in that** the four-bar linkage (18, 28, 38, 48) comprises precisely four joint axes (A, B, C, D).

3. Rear spoiler device (14) according to Claim 1 or 2, **characterized in that** the four joint axes (A, B, C, D) in which the air deflector element (15, 25, 35, 45) is adjustable run parallel, preferably vertically or horizontally.

4. Rear spoiler device (14) according to one of the preceding claims, **characterized in that** the four-bar linkage (18, 28, 38, 48) forms a positive guidance for adjusting the air deflector element (15, 25, 35, 45) between its basic position and its drive position.

5. Rear spoiler device (14) according to one of the preceding claims, **characterized in that** the four-bar linkage (18, 28, 38, 48) comprises:
at least one main oscillating link (16, 26, 36, 46) of greater length (L1, L3) and at least one secondary oscillating link (17, 27, 37, 47) of a smaller length (L2, L4),
wherein the main oscillating link (16, 26, 36, 46) and the secondary oscillating link (17, 27, 37, 47) each comprise a front joint (16a, 17a, 26a, 27a, 36a, 37a, 46a, 47a) for attachment to the rear door (6, 8) and a rear joint (16b, 17b, 26b, 27b, 36b, 37b, 46b, 47b), which serves for pivotally connecting the main oscillating link (16) and the secondary oscillating link (17) each to the air deflector element (15, 25, 35, 45).

6. Rear spoiler device (14) according to Claim 5, **characterized in that** the front joint (17a, 27a, 37a, 47a) of the secondary oscillating link (17, 27, 37, 47) is attached to the rear door (6, 8) further outwards towards a side wall (3) or the roof (4) of the vehicle (1) than the front joint (16a, 26a, 36a, 46a) of the main oscillating link (16, 26, 36, 46).

7. Rear spoiler device (14) according to Claim 5 or 6, **characterized in that** the rear joint (17b, 27b, 37b, 47b) of the secondary oscillating link (17, 27, 37, 47) is attached to the air deflector element (15, 25, 35, 45) further outwards than the rear joint (16b, 26b, 36b, 46b) of the main oscillating link (16, 26, 36, 46).

8. Rear spoiler device (14) according to one of Claims 5 to 7, **characterized in that** a first swivel angle (α1) of the main oscillating link (16, 26, 36, 46) is smaller than a second swivel angle (α2) of the secondary oscillating link (17, 27, 37, 47).

9. Rear spoiler device (14) according to one of Claims 5 to 8, **characterized in that** in the basic position the air deflector element (15, 25, 35, 45) rests flat on the secondary oscillating link (17, 27, 37, 47) and the main oscillating link (16, 26, 36, 46) and substantially parallel to the rear door (6, 8) and in the drive position protrudes from the rear door (6, 8) at a drive position angle (α3), which is greater than 0° and less than 90°.

10. Rear spoiler device (14) according to one of Claims 5 to 9, **characterized in that** it comprises two secondary oscillating links (17, 27. 37, 47) having front joints (17a, 27a, 37a, 47a) lying in a common joint axis (B) and rear joints (17b, 27b, 37b, 47b) lying in a common joint axis (D), and a main oscillating link (16) arranged between the secondary oscillating links (17), in order to rest with no overlap on the rear door (6, 8) in the basic position.

11. Rear spoiler device (14) according to one of the preceding claims, **characterized in that** with its front end (15a, 25a) the air deflector element (15, 25) comprises a contour extension (54), which in the drive position extends over a vehicle structure (2) of the rear area or up to a side wall (3) of the vehicle (1), in order to bridge an intermediate gap.

12. Rear spoiler device (14) according to one of the preceding claims, **characterized in that** it comprises a side air deflector element (15, 25), having vertically running joint axes (A, B, C, D), for extending the contour of a side wall (3) of the vehicle (1).

13. Rear spoiler device (14) according to one of the preceding claims, **characterized in that** it comprises a roof air deflector element (35, 45), having horizontally running joint axes, for extending the contour of a roof (4) of the vehicle (1) .

14. Rear spoiler device (14) according to one of the preceding claims, **characterized in that** arresting mechanisms (71, 69, 52, 62) for the basic position and/or drive position are provided for fitting to at least the one rear door (6, 8).

15. Rear spoiler device (14) according to one of the preceding claims, **characterized in that** it comprises at least one spring device (68), which pushes at least the one air deflector element (15, 25, 35, 45) into the basic position in a first swivel range and into the drive position in a second swivel range, particularly in the form of a bistable arrangement having a dead-point position between the first swivel range and second swivel range.

16. Rear spoiler device (14) according to one of the preceding claims, **characterized in that** it comprises a left-hand side spoiler device (9) and left-hand roof spoiler device (11) for attachment to a left-hand rear door (6) of the vehicle (1) and a right-hand side spoiler device (10) and right-hand roof spoiler device (12) for attachment to a right-hand rear door (8) of the vehicle (1), wherein the rear spoiler device (14) in its basic position with the two rear doors (6, 8) swiveled forwards and resting on the side walls (3) of the vehicle (1) can be accommodated between the rear doors (6, 8) and the side walls (3).

17. Vehicle (1) having a rear spoiler device (14) according to Claim 16, wherein the vehicle (1) comprises two pivoted rear doors (6, 8), which can be opened by more than 180° forwards, in particular approximately 270°,
wherein the rear spoiler device (14) is attached only to the rear doors (6, 8), and
in the basic position of the rear spoiler device (14) the rear doors (6, 8) can be fixed to the sidewalls (3) of the vehicle (1), wherein the rear spoiler device (14) can be accommodated between the sidewalls (3) and the rear doors (6, 8).

## Revendications

1. Dispositif (14) de becquet arrière pour un véhicule (1) présentant au moins une porte arrière (6, 8) pivotante, le dispositif (14) de becquet arrière présentant au moins :
un élément (15, 25, 35, 45) de guidage d'air apte à être déplacé entre une position de base et une position de conduite en vue de prolonger le contour et de guider l'air aérodynamiquement et
un dispositif de soutien (18, 28, 38, 48) qui soutient l'élément (15, 25, 35, 45) de guidage d'air dans sa position de conduite, le dispositif de becquet arrière pouvant être placé complètement sur une porte arrière (6) ou sur les deux portes arrière (6, 8),
**caractérisé en ce que**
le dispositif de soutien présente un accouplement (18, 28, 38, 48) à quatre articulations qui présente au moins quatre articulations ou axes d'articulation (A, B, C, D) pour déplacer l'élément (15, 25, 35, 45) de guidage d'air entre la position de base et la position de conduite.

2. Dispositif (14) de becquet arrière selon la revendication 1, **caractérisé en ce que** l'accouplement (18, 28, 38, 48) à quatre articulations présente exactement quatre axes d'articulation (A, B, C, D).

3. Dispositif (14) de becquet arrière selon les revendications 1 ou 2, **caractérisé en ce que** les autres axes d'articulation (A, B, C, D) dans lesquels l'élément (15, 25, 35, 45) de guidage d'air peut être déplacé s'étendent en parallèle, et de préférence à la verticale ou à l'horizontale.

4. Dispositif (14) de becquet arrière selon l'une des revendications précédentes, **caractérisé en ce que** l'accouplement (18, 28, 38, 48) à quatre articulations forme un guide forcé qui déplace l'élément (15, 25, 35, 45) de guidage d'air entre sa position de base et sa position de conduite.

5. Dispositif (14) de becquet arrière selon l'une des revendications précédentes, **caractérisé en ce que** l'accouplement (18, 28, 38, 48) à quatre articulations présente :
au moins une bascule principale (16, 25, 36, 46) présentant une grande longueur (L1, L3) et au moins une bascule secondaire (17, 27, 37, 47) présentant une longueur (L2, L4) plus petite,
la bascule principale (16, 25, 36, 46) et la bascule secondaire (17, 27, 37, 47) présentant chacune une articulation avant (16a, 17a, 26a, 27a, 36a, 37a, 46a, 47a) destinée à la liaison aux portes arrière (6, 8) et une articulation arrière (16b, 17b, 26b, 27b, 36b, 37b, 46b, 47b) par laquelle la bascule principale (16) et la bascule secondaire (17) sont chacune articulée sur l'élément (15, 25, 35, 45) de guidage d'air.

6. Dispositif (14) de becquet arrière selon la revendication 5, **caractérisé en ce que** l'articulation avant (17a, 27a, 37a, 47a) de la bascule secondaire (17, 27, 37, 47) est disposée sur les portes arrière (6, 8) plus à l'extérieur d'une paroi latérale (3) ou du toit (4) du véhicule (1) que l'articulation avant (16a, 26a, 36a, 46a) de la bascule principale (16, 25, 36, 46).

7. Dispositif (14) de becquet arrière selon les revendications 5 ou 6, **caractérisé en ce que** l'articulation arrière (17b, 27b, 37b, 47b) de la bascule secondaire (17, 27, 37, 47) est raccordée à l'élément (15, 25, 35, 45) de guidage d'air plus à l'extérieur que l'articulation arrière (16b, 26b, 36b, 46b) de la bascule principale (16, 25, 36, 46).

8. Dispositif (14) de becquet arrière selon l'une des revendications 5 à 7, **caractérisé en ce qu'**un premier angle de pivotement (α1) de la bascule principale (16, 25, 36, 46) et plus petit qu'un deuxième angle de pivotement (α2) de la bascule secondaire (17, 27, 37, 47).

9. Dispositif (14) de becquet arrière selon l'une des revendications 5 à 8, **caractérisé en ce que** l'élément (15, 25, 35, 45) de guidage d'air repose à plat sur la bascule secondaire (17, 27, 37, 47) dans la position de base et sur la bascule principale (16, 25, 36, 46), essentiellement en parallèle aux portes arrière (6, 8), et **en ce que** dans la position de conduite, il déborde des portes arrière (6, 8) d'un angle (α3) de position de conduite supérieur à 0° et inférieur à 90°.

10. Dispositif (14) de becquet arrière selon l'une des revendications 5 à 9, **caractérisé en ce qu'**il présente deux bascules secondaires (17, 27, 37, 47) présentant des articulations avant (17a, 27a, 37a, 47a) situées dans un axe d'articulation (B) commun et des articulations arrière (17b, 27b, 37b, 47b) situées dans un axe d'articulation (D) commun, ainsi qu'une bascule principale (16) disposée entre les bascules secondaires (17) de manière à être placée sans recouvrement sur les portes arrière (6, 8) en position de base.

11. Dispositif (14) de becquet arrière selon l'une des revendications précédentes, **caractérisé en ce que** l'élément (15, 25) de guidage d'air présente à son extrémité avant (15a, 25a) un prolongement (54) de contour qui s'étend dans la position de conduite au-dessus d'une structure (2) du véhicule de la partie arrière ou jusqu'à une paroi latérale (3) du véhicule (1), pour recouvrir un interstice intermédiaire.

12. Dispositif (14) de becquet arrière selon l'une des revendications précédentes, **caractérisé en ce qu'**il présente un élément latéral (15, 25) de guidage d'air qui prolonge le contour d'une paroi latérale (3) du véhicule (1), avec des axes d'articulation (A, B, C, D) s'étendant à la verticale.

13. Dispositif (14) de becquet arrière selon l'une des revendications précédentes, **caractérisé en ce qu'**il présente un élément (35, 45) de guidage d'air de toit qui prolonge le contour du toit (4) du véhicule (1), avec des axes d'articulation s'étendant à l'horizontale.

14. Dispositif (14) de becquet arrière selon l'une des revendications précédentes, **caractérisé en ce que** des blocages (71, 69, 52, 62) pour la position de base et/ou la position de conduite sont prévus pour être montés sur la ou les portes arrière (6, 8).

15. Dispositif (14) de becquet arrière selon l'une des revendications précédentes, **caractérisé en ce qu'**il présente au moins un dispositif élastique (68) qui repousse le ou les éléments (15, 25, 35, 45) de guidage d'air dans une première plage de pivotement dans la position de base et dans une plage de pivotement dans la position de conduite, en particulier en tant qu'agencement bistable présentant un poids mort entre la première plage de pivotement et la deuxième plage de pivotement.

16. Dispositif (14) de becquet arrière selon l'une des revendications précédentes, **caractérisé en ce qu'**il présente un dispositif (9) de becquet latéral gauche et un dispositif (11) de becquet de toit gauche destiné à être placé sur une porte arrière gauche (6) du véhicule (1) et un dispositif (10) de becquet latéral droit et un dispositif (12) de becquet de toit droit destiné à être placé sur la porte arrière droite (8) du véhicule (1), le dispositif (14) de becquet arrière pouvant être repris dans sa position de base par pivotement des deux portes arrière (6, 8) vers l'avant et placement sur les parois latérales (3) du véhicule (1) entre les portes arrière (6, 8) et les parois latérales (3).

17. Véhicule (1) présentant un dispositif (14) de becquet arrière selon la revendication 16, le véhicule (1) présentant deux portes arrière pivotante (6, 8) qui peuvent pivoter vers l'avant sur plus de 180° et en particulier sur environ 270°,
le dispositif (14) de becquet arrière étant placé uniquement sur les portes arrière (6, 8) et
lorsque dispositif (14) de becquet arrière est en position de base, les portes arrière (6, 8) peuvent être fixées sur les parois latérales (3) du véhicule (1), le dispositif (14) de becquet arrière pouvant être repris entre les parois latérales (3) et les portes arrière (6, 8).
